Europäisches Patentamt

**European Patent Office**

**Office européen des brevets**

(19)

(11) Numéro de publication: **0 019 550**
A2

# (12) DEMANDE DE BREVET EUROPEEN

(21) Numéro de dépôt: **80400675.7**

(22) Date de dépôt: **14.05.80**

(51) Int. Cl.³: **B 60 R 25/10**

(30) Priorité: **16.05.79 FR 7912442**

(43) Date de publication de la demande:
**26.11.80 Bulletin 80/24**

(84) Etats Contractants Désignés:
**AT BE CH DE FR GB IT LI LU NL SE**

(71) Demandeur: **Zarzev, Alexandre**
**Tour Eve**
**F-92800 Puteaux Hauts-de-Seine(FR)**

(72) Inventeur: **Zarzev, Alexandre**
**Tour Eve**
**F-92800 Puteaux Hauts-de-Seine(FR)**

(74) Mandataire: **Casanova, André CABINET ARMENGAUD**
**JEUNE CASANOVA, AKERMAN, LEPEUDRY et al,**
**23 boulevard de Strasbourg**
**F-75010 Paris(FR)**

(54) **Dispositif d'alarme sonore, en particulier pour signaler les tentatives d'effraction ou de vol d'un véhicule automobile.**

(57) L'invention concerne un dispositif d'alarme sonore.

L'avertisseur sonore 1 d'une automobile est alimenté par la batterie B, en série avec un interrupteur manuel I, un contact vibrant C, et un thyristor Th. Le potentiel de B n'est transmis à l'électrode de commande de Th, à travers I, une bascule bistable $P_1$-$P_2$, et un inverseur P3, qu'après un retardement, produit par $R_5$-$C_3$, de par exemple 50 s., et fermeture du contact PO lorsque la portière de l'automobile est ouverte par une personne non autorisée; le conducteur a 50 s. pour sortir du véhicule, et une durée de par exemple 5 s., produite par le retardement $R_1$-$C_1$, pour y rentrer et fermer l'interrupteur I, sans déclencher le klaxon.

L'invention est applicable pour signaler les tentatives d'effraction ou de vol d'un véhicule automobile.

./...

Dispositif d'alarme sonore, en particulier pour signaler les tentatives d'effraction ou de vol d'un véhicule automobile.

-------------------------

La présente invention concerne un dispositif d'alarme sonore, en particulier pour signaler les tentatives d'effraction ou de vol d'un véhicule automobile.

On connaît déjà différentes formes de réalisation de dispositifs d'alarme sonore, de ce genre.

Dans un dispositif connu d'alarme sonore, un avertisseur sonore, en particulier celui dont est pourvu le véhicule automobile, a son circuit de commande électrique connecté aux bornes d'une source de courant électrique, notamment aux bornes de la batterie du véhicule, en série avec un interrupteur manuel, monté à l'intérieur du véhicule, un contact électromécanique, vibrant ou oscillant sous l'effet des secousses communiquées au véhicule, ainsi qu'avec un commutateur à l'état solide, ayant une électrode de commande.

Les dispositifs d'alarme sonore de ce type connu offrent l'inconvénient suivant : lorsqu'un dispositif de ce genre a été mis en service, notamment par fermeture de l'interrupteur manuel, l'avertisseur sonore entre en action à la seule condition que des secousses soient appliquées au véhicule; certes, la fonction recherchée, d'alarme, est ainsi obtenue, mais il peut en résulter une nuisance acoustique grave, puisque l'alarme sonore peut aussi bien être déclenchée par n'importe quelle secousse ou vibration, communiquée au véhicule même sans aucune intention d'effraction ou de vol, par exemple par d'autres véhicules, venant heurter par mégarde celui muni du dispositif d'alarme, notamment au cours de manoeuvres de parcage, ou encore par des enfants jouant à proximité du véhicule ou s'amusant à en déclencher l'alarme.

Le dispositif d'alarme sonore selon la présente invention est du type qui vient d'être indiqué, mais il ne présente pas le risque de créer une nuisance acoustique, en particulier dans les cas mentionnés précédemment.

Le dispositif d'alarme sonore, en particulier pour signaler les tentatives d'effraction ou de vol d'un véhicule automobile, selon la présente invention est du type précédemment indiqué, et il est caractérisé en ce qu'il comporte en outre une bascule bistable, connectable à la batterie par l'interrupteur manuel, et ayant au moins une entrée de commande, ainsi qu'une sortie, connectée à l'électrode de commande du commutateur à l'état solide par l'intermédiaire d'un premier circuit de retardement, des moyens, comprenant au moins un contact électrique, actionné par l'une des portières du véhicule, pour, à l'ouverture de ladite portière, transmettre un signal à l'entrée de commande de ladite bascule, ainsi qu'un second circuit de retardement, monté de façon à empêcher tout basculement de la bascule pendant une durée prédéterminée après la fermeture de l'interrupteur manuel.

Après avoir fermé l'interrupteur manuel, monté à l'intérieur du véhicule, son conducteur peut, pendant ladite durée prédéterminée, ouvrir la portière pour sortir du véhicule sans qu'il en résulte un basculement de la bascule bistable, grâce à l'action d'ihnibition du second circuit de retardement; de ce fait, le commutateur à l'état solide reste bloqué, si bien que les vibrations que le conducteur du véhicule communique à ce dernier en en sortant, puis en refermant la portière, ne suffisent pas pour fermer le circuit électrique d'alimentation de l'avertisseur sonore, qui n'est donc pas déclenché. Dès la fin de la durée prédéterminée, toute tentative d'effraction du véhicule par ouverture de sa portière aura pour effet de faire basculer la bascule bistable, qui rendra alors conducteur le commutateur à l'état solide, si bien que les secousses communiquées au véhicule par l'ouverture de la portière, et éventuellement l'entrée du voleur à l'intérieur du véhicule, se traduiront par des fermetures du circuit d'alimentation de l'avertisseur sonore, qui sera par suite déclenché. Comme, cependant, chaque déblocage du commutateur à l'état solide est retardé convenablement par le premier circuit de retardement, si c'est le conducteur du véhicule qui y a rouvert la portière pour rentrer éventuellement dans ledit véhicule, il disposera d'un temps suffisant pour fermer l'interrupteur manuel avant le déclenchement de l'avertisseur sonore.

La bascule bistable ayant débloqué le commutateur à l'état solide dès la première ouverture de la portière du véhicule, intervenue après la durée prédéterminée, ce n'est pas seulement la première tentative d'effraction du véhicule qui sera signalée par l'avertisseur sonore, mais aussi, éventuellement, toutes les tentatives ultérieures d'effraction, se traduisant par la communication de secousses au véhicule, et celà jusqu'à ce que le conducteur du véhicule ait à nouveau ouvert l'interrupteur manuel.

Dans une forme de réalisation préférée du dispositif d'alarme sonore selon la présente invention, la bascule bistable est du type RS, comportant deux portes logiques ET-NON, son entrée R étant connectée au second circuit de retardement, et son entrée S, au contact de portière.

Cette forme de réalisation du dispositif selon la présente invention est particulièrement peu coûteuse, fiable, de faible encombrement et de faible consommation d'énergie électrique en position de veille, dans la mesure notamment où les portes logiques peuvent être constituées par des circuits solides intégrés, par exemple du type connu dit "CMOS".

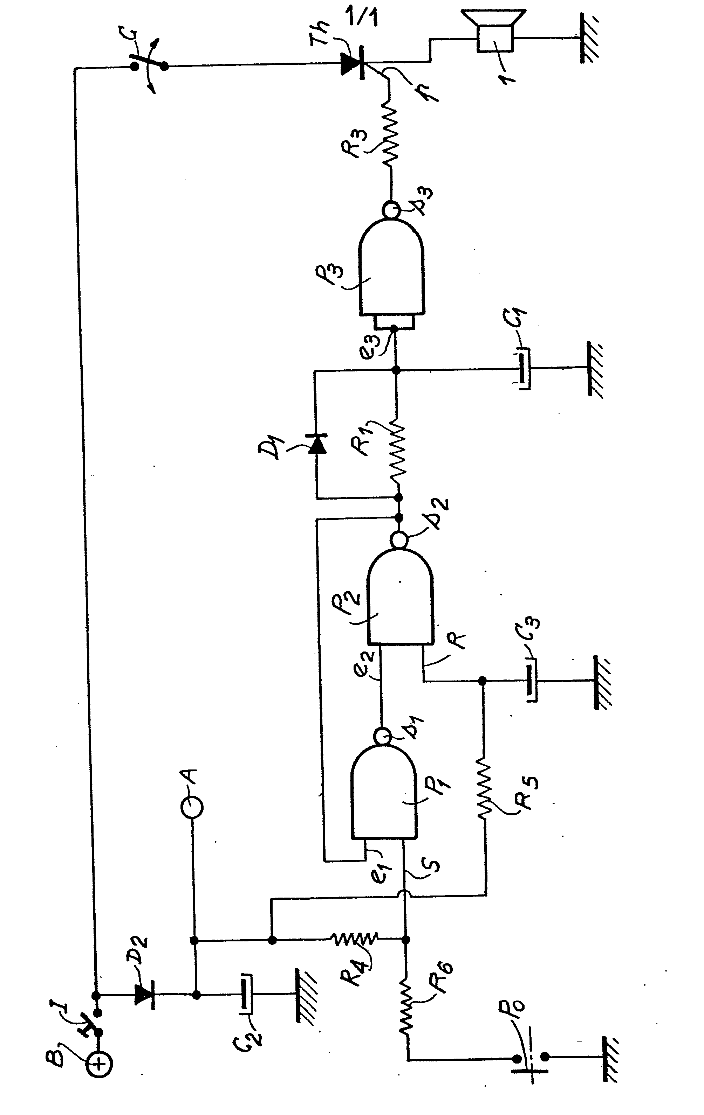

A titre d'exemple, on a décrit ci-dessous et illustré schématiquement au dessin annexé une forme de réalisation du dispositif d'alarme sonore selon la présente invention.

La figure unique du dessin annexé est le schéma des principaux circuits électriques de cette forme de réalisation.

La forme de réalisation du dispositif d'alarme sonore, selon la présente invention, qui est illustrée au dessin annexé, est spécialement destinée à signaler les tentatives d'effraction ou de vol du véhicule automobile sur lequel elle est montée. Cette forme de réalisation comporte un avertisseur sonore 1, de préférence l'avertisseur sonore dont est muni le véhicule, dont le circuit de commande électrique est connecté, d'un côté, à la masse du véhicule, et de l'autre côté à la borne positive, B, de sa batterie, en série avec un interrupteur manuel I, un contact électromécanique C, ainsi qu'avec un commutateur à l'état solide, par exemple un thyristor, Th, ayant une électrode de commande, ou porte, p. L'interrupteur manuel I est monté dans la cabine du véhicule, à un endroit accessible de préférence à son conducteur, par exemple sur le tableau de bord, ou bien en dessous de celui-ci. Le contact électromécanique C est réalisé et disposé de manière à vibrer ou osciller sous l'effet des secousses communiquées au véhicule; il peut être constitué, de façon connue en soi, par une lame de ressort sensiblement horizontale, ayant une extrémité encastrée, une extrémité libre, chargée de préférence par une masse, et une partie médiane de contact, qui lors des vibrations de la lame, établit des contacts temporaires avec un conducteur fixe; un tel dispositif est généralement monté dans un boîtier en matière isolante, à l'intérieur duquel peut être généralement fixée une carte à circuits imprimés, portant notamment le thyristor Th ainsi que les autres composants des circuits électriques du dispositif d'alarme, qui seront décrits ultérieurement . Un tel boîtier, connu en soi, peut être fixé à l'intérieur du véhicule, dans une position appropriée, par exemple en dessous du tableau de bord.

Le circuit électrique du dispositif d'alarme sonore selon la présente invention comporte en outre les composants suivants : trois portes logiques ET-NON, constituées de préférence par des circuits solides, intégrés, du type CMOS. Les deux portes P1 et P2 sont interconnectées de manière à former une bascule bistable du type connu, dit "RS". A cet effet, la sortie s1 de la porte P1 est connectée à l'entrée e2 de la porte P2, dont la sortie s2 est elle-même connectée à l'entrée el de la porte P1; les entrées R et S de la bascule bistable sont constituées respectivement par les autres entrées des portes P2 et P1. Un premier circuit de retardement est connecté à la sortie s2 de la porte P2, qui est aussi la sortie de la bascule du type RS; ce premier circuit de retardement est constitué par une résistance R1, connectée en série, et un condensateur, C1, monté en parallèle entre la masse et l'extrémité de la résistance R1, opposée à la sortie s2 de la bascule. La résistance R1 est shuntée par une diode D1, polarisée de façon à laisser passer un courant positif sortant de la sortie s2. Le point commun à la résistance R1 et au condensateur C1 est relié à une entrée unique, e3, obtenue en connectant en parallèle les différentes entrées de la porte P3, de manière à constituer un simple inverseur, dont la sortie, s3, est reliée à l'électrode de commande p du thyristor Th, à travers une résistance en série, R3. Un condensateur de découplage, C2, en série avec une diode D2, de polarité appropriée pour laisser passer un courant positif en provenance de la borne B, de la batterie, forme un dispositif de découplage des parasites, qui est monté en parallèle entre l'interrupteur I et la masse du véhicule. Lorsque l'interrupteur manuel I est fermé, la tension continue présente sur la borne B de la batterie, est prélevée sur une borne A, reliée au point commun des composants C2 et D2, pour alimenter les circuits intégrés constituant les portes P1, P2 et P3. La tension présente sur la borne A est d'autre part appliquée à l'entrée S de la porte P1, à travers une résistance R4, et à l'entrée R de la porte P2, par l'intermédiaire d'un second circuit de retardement; celui-ci est constitué par une résistance R5, connectée en série entre la borne A et l'entrée R de la porte P2, et par un condensateur C3, connecté en parallèle entre la masse et ladite entrée R. Enfin, au moins un contact de portière, c'est-à-dire un contact électrique $P_o$, qui est fermé par exemple lorsqu'est ouverte la portière du véhicule la plus proche de son volant, est connecté, en série avec une résistance R6, entre l'entrée

6

S de la porte P1 et la masse du véhicule.

Le dispositif d'alarme selon la présente invention, qui vient d'être décrit, fonctionne de la façon suivante :

lorsque le conducteur du véhicule désire mettre le dispositif d'alarme sonore en service, avant de quitter le véhicule, il ferme l'interrupteur manuel I, auquel il a un accès aisé. Cet interrupteur manuel I pourrait être éventuellement du type à clef, bien que celà ne soit pas indispensable si le conducteur prend la précaution, après être sorti du véhicule, de bloquer toutes les issues de ce dernier. Cet interrupteur manuel I pourrait éventuellement être combiné avec le commutateur à clef dont beaucoup de véhicules sont munis de façon à n'autoriser le démarrage du moteur qu'aux personnes munies de la clef de sûreté. Cependant, l'interrupteur manuel I peut être aussi un simple interrupteur à bascule.

Dès que l'interrupteur manuel I est fermé, la tension de la batterie, appliquée à la borne A, alimente les circuits intégrés constituant les portes P1 à P3, et applique la tension de la batterie (potentiel élevé) à l'entrée S de la bascule bistable, à travers la résistance R4 . Comme, cependant, le condensateur C3 est déchargé, l'entrée R de la bascule est pratiquement au potentiel de la masse (potentiel bas); il résulte des propriétés connues des bascules bistables du type RS que la sortie s2 se trouve également à un potentiel élevé, positif, qui polarise donc la diode D1 dans le sens passant; par suite un potentiel élevé est aussitôt appliqué, à travers ladite diode D1, rendue passante, au condensateur C1, qui est immédiatement chargé sous ce potentiel élevé, lequel est également appliqué à l'entrée e3 de l'inverseur formé par la porte P3; il apparaît donc sur sa sortie s3 un potentiel bas, que la résistance R3 transmet à l'électrode de commande p du thyristor Th; ce dernier reste par suite bloqué.

Lorsque le conducteur ouvre la portière du véhicule pour en sortir, le contact de portière $P_0$ est fermé au moins temporairement, si bien que le potentiel appliqué à l'entrée S de la bascule bistable passe, au moins temporairement, de la valeur élevée qu'il avait précédemment, à une valeur plus basse, correspondant à la division de la tension de la batterie dans le rapport $R4/(R4 + R6)$. Comme, cependant, la constante de temps $R5.C3$ du second circuit de retardement a été choisie suffisamment grande, par exemple de l'ordre de 50 secondes, lorsque le contact de portière $P_0$ est actionné par le conducteur du véhicule, la tension de charge du condensateur $C3$ n'est pas encore suffisante pour autoriser, au niveau de son entrée R, le basculement de la bascule bistable. Par suite, le thyristor Th reste bloqué, si bien que les secousses que le conducteur du véhicule peut lui communiquer, en en sortant, puis en refermant la portière, ne suffisent pas pour fermer le circuit d'alimentation de l'avertisseur sonore, 1, au niveau du contact vibrant C.

Par contre, toute ouverture de la portière, produite plus de cinquante secondes après la fermeture de l'interrupteur manuel I, par exemple par une personne non autorisée, qui a fracturé la portière, provoque une nouvelle fermeture, au moins temporaire, du contact de portière $P_0$; comme cependant la charge du condensateur $C3$ est alors terminée, le potentiel élevé qui est appliqué à l'entrée R de la bascule bistable autorise son basculement sous l'action du potentiel bas appliqué au moins temporairement à son entrée S. Il apparaît aussitôt un potentiel bas sur la sortie s2 de la bascule, si bien que le condensateur $C1$ se décharge à travers la résistance R1, avec la constante de temps $R1.C1$. Au bout d'une durée prédéterminée, par exemple de cinq secondes, après la nouvelle ouverture de la portière, c'est un potentiel bas qui est appliqué à l'entrée e3 de l'inverseur formé par la porte P3, si bien que sa sortie s3 transmet, à travers la résistance R3, un potentiel élevé à l'électrode de commande p du thyristor Th; ce dernier est donc débloqué, si bien que les secousses que la personne non autorisée communique ensuite au véhicule, en y pénétrant, ou même seulement en refermant la portière précédemment ouverte, suffisent à produire la fermeture du circuit d'alimentation de l'avertisseur sonore, 1, au niveau du contact électromécanique vibrant C. Bien entendu, l'avertisseur sonore ne fonctionne que pendant chaque fermeture brève du contact vibrant C, ou pendant une durée juste un peu supérieure, dans le cas où l'avertisseur sonore est commandé par un relais, aux bornes de la bobine duquel un condensateur approprié est connecté de façon connue en soi. Cependant, même si la personne non autorisée referme la portière précédemment ouverte, puis l'ouvre à nouveau, et pénètre éventuellement à l'intérieur du véhicule, ou même si une tierce personne effectue les mêmes manoeuvres, l'avertisseur sonore 1 est à nouveau déclenché à chaque fois.

Si, cependant, c'est le conducteur du véhicule lui-même qui ouvre à nouveau sa portière à un instant quelconque après la fin de la durée prédéterminée de cinquante secondes, il dispose d'un délai d'environ cinq secondes, avant le déclenchement retardé de l'avertisseur sonore, pour ouvrir l'interrupteur manuel I, ce qui a pour effet de couper les alimentations des circuits intégrés P1 à P3, à partir de la borne A; de ce fait, même si le condensateur C1 s'est alors suffisamment déchargé à travers la résistance R1, l'inverseur constitué par la porte P3 ne peut plus transmettre un potentiel élevé à l'électrode de commande p du thyristor Th, qui reste donc bloqué. Le conducteur du véhicule dispose donc d'un délai suffisant, d'environ 5 secondes, pour rentrer dans le véhicule et désarmer le dispositif d'alarme sonore avant que celui-ci ne soit déclenché par la réouverture de la portière.

Les parasites de tension positive qui, lorsque l'interrupteur manuel I est fermé, peuvent provenir de la borne B de la batterie, sont dérivés vers la masse du véhicule à travers le condensateur C2, tandis que les parasites de tension négative sont arrêtés par la diode D2; cette disposition évite par exemple que ces parasites ne puissent, lorsque l'entrée R de la bascule bistable a été amenée au potentiel élevé, abaisser ce potentiel, et, par suite, produire un basculement intempestif de ladite bascule.

La présente invention n'est pas limitée à la forme de réalisation précédemment décrite. Elle englobe toutes ses variantes. Les deux circuits de retardement R1-C1 et R5-C3 sont susceptibles de réalisations différentes de celles précédemment décrites, et bien connues. De même, la bascule bistable du type RS peut être réalisée avec des composants différents des deux portes ET-NON précédemment décrites, par exemple en utilisant un certain nombre de composants solides discrets, notamment de transistors et de diodes. Le dispositif selon la présente invention peut aussi être équipé d'une autre bascule bistable, d'un type approprié quelconque.

10

## REVENDICATIONS DE BREVET

1.- Dispositif d'alarme sonore, en particulier pour signaler les tentatives d'effraction ou de vol d'un véhicule automobile, comportant un avertisseur sonore (1), dont le circuit de commande électrique est connecté aux bornes d'une source de courant électrique, en particulier de la batterie (B) du véhicule, en série avec un interrupteur manuel (I), monté à l'intérieur du véhicule, un contact électromécanique (C), vibrant ou oscillant sous l'effet des secousses communiquées au véhicule, ainsi qu'avec un commutateur à l'état solide (Th), ayant une électrode de commande (p), dispositif caractérisé en ce qu'il comporte en outre une bascule bistable $(P_1, P_2)$, connectable à la batterie (B) par l'interrupteur manuel (I), et ayant au moins une entrée de commande (S), ainsi qu'une sortie $(s_2)$, connectée à l'électrode de commande (p) du commutateur à l'état solide (Th) par l'intermédiaire d'un premier circuit de retardement $(R_1, C_1)$ des moyens, comprenant au moins un contact $P_0$ électrique, actionné par l'une des portières du véhicule, pour, à l'ouverture de ladite portière, transmettre un signal à l'entrée de commande (S) de ladite bascule $(P_1, P_2)$ ainsi qu'un second circuit de retardement $(R_5, C_3)$, monté de façon à empêcher tout basculement de la bascule $(P_1, P_2)$ pendant une durée prédéterminée après la fermeture de l'interrupteur manuel (I).

2.- Dispositif selon la revendication 1, caractérisé en ce que la bascule bistable $(P_1 P_2)$ est du type RS, comportant deux portes logiques ET-NON, son entrée R étant connectée au second circuit de retardement $(R_5, C_3)$, et son entrée S au contact de portière $(P_0)$.

3.- Dispositif selon la revendication 2, caractérisé en ce que le premier circuit de retardement $(R_1, C_1)$ du type R-C, est shunté par une diode $(D_1)$ de polarité appropriée pour éviter que la fermeture de l'interrupteur manuel (I) ne provoque une fermeture immédiate du commutateur à l'état solide (Th).

4.- Dispositif selon l'une quelconque des revendications 2 et 3, caractérisé en ce que le second circuit de retardement $(R_5, C_3)$ du type R-C, est inséré entre l'interrupteur manuel (I) et l'entrée R de la bascule bistable $(P_1, P_2)$.

5.- Dispositif selon l'une quelconque des revendications 2 à 4, caractérisé en ce qu'un inverseur $(P_3)$, constitué par exemple par une porte ET-NON dont les entrées sont connectées en parallèle, est inséré entre le premier circuit de retardement $(R_1 C_1)$ et l'électrode de commande ( p) du commutateur à l'état solide (Th).

6.- Dispositif selon l'une quelconque des revendications 1 à 5, caractérisé en ce qu'un condensateur de découplage $(C_2)$ des parasites, éventuellement en série avec une diode de polarité $(D_2)$ appropriée, est inséré entre l'interrupteur manuel (I) et la masse du véhicule.